# FASCICULE DE BREVET EUROPEEN

(11) **EP 4 208 383 B1**
(45) Date de publication et mention de la délivrance du brevet: **03.09.2025**
(21) Numéro de dépôt: 21739708.2
(22) Date de dépôt: 08.07.2021
(51) Int. Cl.: B62D 25/14, B62D 1/16

(54) **DISPOSITIF DE LIAISON POUR TRAVERSE DE PLANCHE DE BORD**
ARMATURENBRETTQUERVERBINDUNGSVORRICHTUNG
DASHBOARD CROSSMEMBER CONNECTION DEVICE

(30) Priorité: 04.09.2020 FR 2008994
(43) Date de publication de la demande: 12.07.2023
(73) Titulaire: Renault s.a.s, 92100 Boulogne Billancourt (FR)
(72) Inventeur: GASPEL, Bertrand, 78280 GUYANCOURT (FR)
(86) Numéro de dépôt international: PCT/EP2021/068975
(87) Numéro de publication internationale: WO 2022/048815

(56) Documents cités:
- EP-A1- 2 581 294
- JP-A- S61 102 339
- JP-U- S6 181 431
- JP-Y2- H0 343 863
- US-A- 4 671 536
- US-A- 4 682 788

## Description

L'invention concerne un dispositif de liaison destiné à rigidifier la colonne de direction d'un véhicule automobile, du type comprenant une structure de caisse délimitant un habitacle du véhicule et une traverse de planche de bord destinée à recevoir un support de colonne de direction sur lequel est fixée la colonne de direction, ledit dispositif de liaison comprenant au moins un élément de renfort prenant appui sur ladite traverse.

Lors du roulage du véhicule, les vibrations provenant de la route et du groupe motopropulseur (moteur thermique et ligne d'échappement) se transmettent à la caisse respectivement par les liaisons au sol et par l'ensemble des fixations du groupe motopropulseur à la caisse. Elles se transmettent alors, via la traverse de planche de bord, à la colonne de direction du véhicule. Le conducteur est alors susceptible de ressentir ces vibrations, au détriment du confort de conduite. Aussi, pour assurer un bon comportement vibratoire de l'ensemble de la planche de bord, la traverse de planche de bord doit être à même de fournir des appuis suffisamment raides à toutes les pièces qui y sont fixées et, particulièrement, à celles qui présentent une masse importante, telle que la colonne de direction. En effet, la première fréquence de vibration de la pièce rapportée est inversement proportionnelle à sa masse et, plus cette fréquence est basse, plus les risques de bruyance, de casse de la pièce ou d'inconfort physique ou acoustique sont importants. C'est pourquoi, les constructeurs imposent un cahier des charges sévère en termes de prestation vibratoire. En particulier, il est demandé à la colonne de direction de ne présenter aucune vibration à une fréquence de fonctionnement inférieure à un seuil, qui dépend du type de véhicule. Actuellement, pour obtenir une raideur suffisante pour la réalisation de cette prestation, les traverses de planche de bord comprennent généralement une barre transversale formée d'un tube en acier, qui s'étend entre deux brides de fixation permettant d'arrimer ladite barre à la caisse du véhicule, et qui est en outre usuellement soutenue par une ou plusieurs béquilles portant sur le plancher du véhicule, typiquement au niveau du tunnel de ligne d'échappement. Un tel agencement de traverse de planche de bord de véhicule automobile est notamment connu par l'exemple qu'en donne le document FR2970932. Aujourd'hui, on cherche en outre à libérer un maximum d'espace sous la planche de bord, au niveau des jambes du conducteur et du passager, soit pour permettre l'arrivée de nouvelles technologies (traverse rétractable...), soit encore pour améliorer l'habitabilité du véhicule, en particulier dans le contexte du développement des véhicules autonomes. Or, cet espace est jusqu'ici utilisé pour positionner la ou les béquilles de la traverse portant sur le plancher, qui permettent l'atteinte du cahier des charges vibratoire cité ci-avant. Autrement dit, ces éléments de structure, qui prennent appui sur le plancher du véhicule, empêchent d'utiliser de façon optimale l'espace sous-planche.

Le document JP S61 102339 A présente un dispositif de liaison destiné à rigidifier une colonne de direction d'un véhicule automobile, d'un type conforme au préambule de la revendication 1.

Aussi, un but de la présente invention est de pallier tout ou partie des inconvénients de l'art antérieur relevés ci-dessus. En particulier, un but de l'invention est de proposer un dispositif de liaison destiné à rigidifier la colonne de direction d'un véhicule, qui procure la raideur nécessaire à un bon comportement vibratoire de la colonne de direction du véhicule, sans avoir recours à un appui sur le plancher du véhicule.

A cette fin, l'invention concerne un dispositif de liaison destiné à rigidifier la colonne de direction d'un véhicule automobile, du type comprenant une structure délimitant un habitacle du véhicule et une traverse de planche de bord destinée à recevoir un support de colonne de direction sur lequel est fixée une colonne de direction, ladite traverse de planche de bord comprenant au moins un élément de renfort prenant appui sur ladite traverse, ladite structure comprenant un pied avant du côté conducteur prolongeant ladite structure latéralement et verticalement du côté de l'habitacle, ladite traverse de planche de bord étant reliée à un flasque fixé rigidement audit pied avant, ledit élément de renfort comportant au moins un tirant de renfort comprenant une première extrémité fixée sur ladite traverse de planche de bord au niveau dudit support de colonne et une seconde extrémité fixée sur ledit pied avant du véhicule.

Grâce à cet agencement, la traverse de planche de bord est renforcée de sorte à procurer la raideur nécessaire à un bon comportement vibratoire de la colonne de direction et ce, sans avoir recours à un appui sur le plancher. En effet, les pieds avant gauche et droit et donc, en particulier, le pied avant côté conducteur, sont intrinsèquement des éléments très rigides de la structure du véhicule, conçus pour se déformer le moins possible en cas de déformation et en cas de crash, et c'est la raison pour laquelle le pied avant côté conducteur joue un rôle particulièrement important dans le dispositif de l'invention en fournissant une raideur maximale à la traverse au niveau du support de la colonne de direction, via le ou les tirants de renfort. La traverse ainsi renforcée procure un support très raide pour la colonne de direction, ce qui permet d'agir favorablement sur la fréquence du premier mode vibratoire de la colonne sur la traverse en l'augmentant, rendant moins gênant le phénomène de vibration de la colonne. De surcroît, le positionnement du ou des tirants de renfort s'étendant entre la traverse de planche de bord au niveau du support de colonne de direction et le pied avant côté conducteur, libère avantageusement l'espace situé sous la planche de bord, au niveau des jambes du conducteur et du passager.

Selon l'invention, le dispositif de liaison comprend deux tirants de renforts s'étendant entre ladite traverse de planche de bord au niveau dudit support de colonne et ledit pied avant.

Avantageusement, un premier tirant de renfort est fixé sur une partie supérieure dudit pied avant et en ce qu'un second tirant de renfort est fixé sur une partie inférieure dudit pied avant, située à l'opposé de ladite partie supérieure dudit pied avant par rapport à ladite traverse de planche de bord.

Avantageusement, ledit au moins un tirant de renfort est constitué par un corps creux droit s'étendant longitudinalement entre ses deux extrémités et possédant une section transversale constante.

De préférence, la section transversale est sensiblement circulaire ou carrée. De préférence, ledit au moins un tirant de renfort est en acier ou en aluminium. Avantageusement, les première et seconde extrémités dudit au moins un tirant de renfort sont fixées par soudage et/ou vissage

D'autres caractéristiques et avantages de l'invention ressortiront clairement de la description qui en est faite ci-après, à titre indicatif et nullement limitatif, en référence aux dessins annexés sur lesquels :
[Fig. 1] est une vue schématique de dessus du dispositif de liaison selon l'invention ;
[Fig. 2] est une vue schématique de face du dispositif de liaison selon l'invention.

Pour les besoins de la description, on se référera à un repère orthonormé direct XYZ, classiquement utilisé en conception automobile, dans lequel l'axe X désigne la direction longitudinale du véhicule, orienté vers l'arrière, l'axe Y désigne la direction transversale et est orienté vers la droite du véhicule, et l'axe Z désigne la direction verticale, et est orienté vers le haut. Ainsi, les indications telles que longitudinale, transversale, verticale, ainsi que les termes tels que avant, arrière, gauche, droit, inférieur, supérieur sont définis par rapport aux orientations du véhicule suivant le repère ci-dessus.

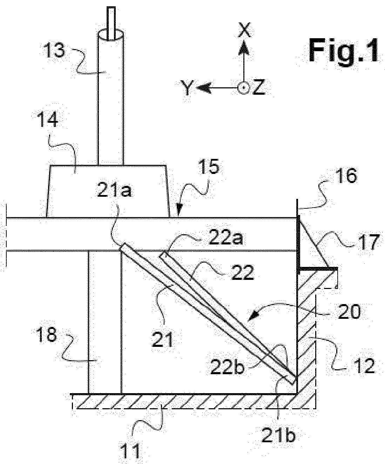

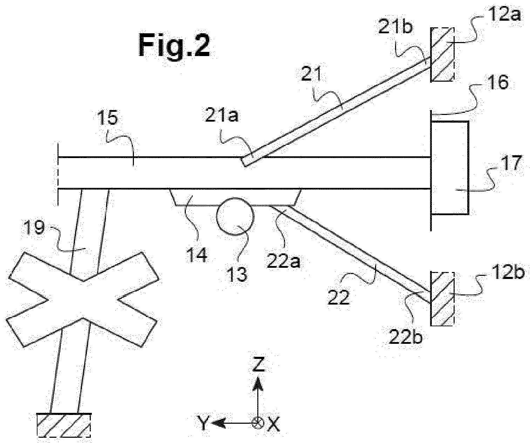

En référence aux figures 1 et 2, le véhicule comporte une structure de caisse, délimitant un habitacle du véhicule. Cette structure comporte notamment une paroi 11 disposée sensiblement verticalement, appelée tablier. La structure de caisse comprend également de chaque côté du véhicule, respectivement gauche et droit, un pied avant gauche et un pied avant droit, qui prolonge la structure de caisse latéralement et verticalement du côté de l'habitacle, en arrière du tablier 11. Seul le pied avant du côté du conducteur, soit le pied avant gauche selon l'exemple, qui intervient dans la mise en œuvre de la présente invention comme il va être décrit ci-après, est représenté sous la référence 12. Les pieds avant sont fixés sur les longerons latéraux gauche et droit de la structure du véhicule (non représentés) et sont notamment destinés à supporter des charnières d'ouvrants du véhicule.

Le véhicule est dirigé au moyen d'un volant de direction (non représenté) relié à une colonne de direction 13, elle-même reliée à un mécanisme de direction qui permet de braquer les roues du véhicule. La colonne de direction 13 est montée sur un support de colonne 14, qui permet notamment de régler son inclinaison.

Le véhicule est équipé d'une traverse de planche de bord 15, destinée à être disposée entre le tablier 11 et l'habitacle du véhicule. Cette traverse de planche de bord 15 s'étend transversalement dans le véhicule, sensiblement en arrière du tablier 11. Cette traverse de planche de bord 15 est destinée à réaliser la liaison entre les pieds avant du véhicule. Ainsi, les deux extrémités longitudinales de la traverse sont fixées à la structure du véhicule. Plus précisément, comme illustré sur les figures, la traverse de planche de bord 15 est reliée à un flasque gauche 16 fixé rigidement au pied avant gauche 12, par exemple par l'intermédiaire d'une équerre 17 de fixation latérale. Par ailleurs, la traverse de planche de bord 15 est aussi reliée au tablier 11 par un élément de liaison 18, s'étendant entre la traverse de planche de bord 15 et le tablier 11. La traverse de planche de bord 15 est constituée par un corps tubulaire en acier procurant une grande inertie.

La traverse de planche de bord 15 supporte l'ensemble de direction incluant la colonne de direction 13 et, en particulier, le support de colonne de direction 14 sur lequel est fixée la colonne de direction 13.

La traverse de planche de bord 15 est destinée à servir de reprise d'effort notamment au support de colonne de direction 14. Elle doit ainsi fournir des appuis suffisamment raides en particulier à ce support de colonne de direction, de façon à assurer un bon comportement vibratoire de l'ensemble de la planche de bord.

Classiquement, une béquille 19 est fixée sur le corps de la traverse à proximité du support de colonne de direction et s'étend entre le corps de la traverse et le plancher du véhicule, pour reprendre une partie des efforts supportés par la traverse et les transmettre à la structure du véhicule via le plancher.

Comme il va être expliqué ci-après, le système de renforcement de la traverse de planche de bord selon l'invention va venir se substituer à cette béquille, dont l'usage est rendu caduc, comme symbolisé par la croix appliquée sur elle en figure 2 et ce, en évitant avantageusement toute reprise d'appui sur le plancher au profit de l'optimisation de l'espace situé sous la planche de bord.

Pour ce faire, afin de fournir néanmoins la raideur nécessaire au niveau de l'appui colonne sur la traverse, indispensable à un bon comportement vibratoire de la colonne, on prévoit un dispositif de liaison 20 permettant d'aller chercher cette raideur sur le pied avant du côté conducteur, soit sur le pied avant gauche selon l'exemple. Ce dispositif de liaison 20 est réalisé au moyen d'au moins un tirant de renfort, s'étendant entre la traverse de planche de bord 15 au niveau du support de colonne 14 et le pied avant gauche 12. Selon un mode de réalisation préférentiel, le dispositif de liaison 20 comprend au moins deux tirants de renfort distincts 21, 22 s'étendant entre la traverse de planche de bord 15 au niveau du support de colonne et le pied avant gauche 12. Préférentiellement encore, le dispositif de liaison 20 forme une structure de renfort globalement en forme de triangle dans un plan sensiblement vertical, qui est constituée d'un premier tirant de renfort 21, dit tirant de renfort supérieur et d'un second tirant de renfort 22, dit tirant de renfort inférieur, dont les premières extrémités respectives, respectivement inférieure 21a et supérieure 22a sont fixées sur la traverse de planche de bord au niveau du support de la colonne de direction et dont les secondes extrémités respectives, respectivement supérieure 21b et inférieure 22b sont fixées sur des parties respectives, respectivement supérieure 12a et inférieure 12b du pied avant gauche 12, qui sont situées à l'opposé l'une de l'autre par rapport à la traverse de planche de bord 15. Les secondes extrémités respectives des tirants de renfort supérieur 21 et inférieur 22 sont fixées sur les parties respectivement supérieure 12a et inférieure 12b du pied avant gauche 12 sensiblement à la verticale l'une de l'autre. Ainsi, le tirant de renfort supérieur 21 est disposé en étant incliné vers le haut entre la traverse de planche de bord 15 et la partie supérieure 12a du pied avant gauche, de telle sorte que son extrémité supérieure 21b est positionnée plus haute que son extrémité inférieure 21a, tandis que le tirant de renfort inférieur 22 est disposé en étant incliné vers le bas entre la traverse de planche de bord 15 et la partie inférieure 12b du pied avant gauche, de telle sorte que son extrémité inférieure 22b est positionnée plus basse que son extrémité supérieure 22a.

Les tirants de renforts 21 et 22 sont constitués chacun par un corps creux, droit et de section constante, préférentiellement circulaire ou carrée. Ils peuvent être réalisés par exemple en acier ou en aluminium, permettant ainsi d'optimiser la conception de la structure de renfort de la traverse de planche de bord, en particulier de réduire le poids. La fixation des extrémités des tirants de renforts sur la traverse de planche de bord et sur le pied avant gauche peut être réalisée par soudage et/ou par vissage.

La rigidité intrinsèque de la zone d'accueil des tirants de renfort sur caisse, constituée par le pied avant côté conducteur, associé à la structure de renfort en triangle des tirants de renfort permet d'augmenter significativement la rigidité de la traverse et en particulier sa raideur au niveau de l'appui colonne.

Des tests ont pu être menés qui ont démontré que la structure de renfort selon l'invention, constituée des deux tirants de renfort 21, 22, en remplacement de la béquille 19, permettait d'agir sur la fréquence du premier mode vibratoire de la colonne de direction sur la traverse de planche de bord, avec une performance équivalente à celle obtenue avec la solution avec béquille. Ainsi, avec les tirants de renfort de l'invention, cette fréquence peut être augmentée de sensiblement 10 Hz, comparativement à la fréquence du premier mode vibratoire sans renfort.

## Revendications

1. Dispositif de liaison destiné à rigidifier la colonne de direction d'un véhicule automobile, du type comprenant une structure de caisse (10) délimitant un habitacle du véhicule et une traverse de planche de bord (15) destinée à recevoir un support de colonne de direction (14) sur lequel est fixée une colonne de direction (13), ledit dispositif de liaison comprenant au moins un élément de renfort prenant appui sur ladite traverse, ladite structure comprenant un pied avant (12) du côté conducteur prolongeant ladite structure latéralement et verticalement du côté de l'habitacle, ladite traverse de planche de bord (15) étant reliée à un flasque (16) fixé rigidement audit pied avant, ledit élément de renfort comportant au moins un tirant de renfort (21, 22) comprenant une première extrémité (21a, 22a) fixée sur ladite traverse de planche de bord au niveau dudit support de colonne et une seconde extrémité (21b, 22b) fixée sur ledit pied avant du véhicule, **caractérisé en ce qu'**il comprend deux tirants de renforts (21, 22) s'étendant entre ladite traverse de planche de bord au niveau dudit support de colonne et ledit pied avant.

2. Dispositif selon la revendication 1, **caractérisé en ce qu'**un premier tirant de renfort (21) est fixé sur une partie supérieure (12a) dudit pied avant (12) et **en ce qu'**un second tirant de renfort (22) est fixé sur une partie inférieure (12b) dudit pied avant, située à l'opposé de ladite partie supérieure dudit pied avant par rapport à ladite traverse de planche de bord (15).

3. Dispositif selon l'une quelconque des revendications précédentes, **caractérisé en ce que** ledit au moins un tirant de renfort est constitué par un corps creux droit s'étendant longitudinalement entre ses deux extrémités et possédant une section transversale constante.

4. Dispositif selon la revendication 3, **caractérisé en ce que** la section transversale est sensiblement circulaire ou carrée.

5. Dispositif selon l'une quelconque des revendications précédentes, **caractérisé en ce que** ledit au moins un tirant de renfort est en acier ou en aluminium.

6. Dispositif selon l'une quelconque des revendications précédentes, **caractérisé en ce que** les première et seconde extrémités dudit au moins un tirant de renfort sont fixées par soudage et/ou vissage.

## Patentansprüche

1. Verbindungsvorrichtung, welche dazu bestimmt ist, die Lenksäule eines Kraftfahrzeugs des Typs zu versteifen, der eine einen Innenraum des Fahrzeugs begrenzende Karosseriestruktur (10) umfasst, und einen Armaturenbrettquerträger (15), der dazu bestimmt ist, einen Lenksäulenhalter (14) aufzunehmen, an dem eine Lenksäule (13) befestigt ist, wobei die Verbindungsvorrichtung mindestens ein Verstärkungselement umfasst, das sich auf dem Querträger abstützt, wobei die Struktur einen vorderen Fuß (12) auf der Fahrerseite umfasst, der die Struktur seitlich und vertikal auf der Seite des Innenraumes verlängert, wobei der Armaturenbrettquerträger (15) mit einem Flansch (16) verbunden ist, der starr an dem vorderen Fuß befestigt ist, wobei das Verstärkungselement mindestens eine Verstärkungszugstange (21, 22) aufweist, die ein erstes Ende (21a, 22a), das am Armaturenbrettquerträger im Bereich des Lenksäulenhalters befestigt ist, und ein zweites Ende (21b, 22b), das am vorderen Fuß des Fahrzeugs befestigt ist, umfasst, **dadurch gekennzeichnet, dass** sie zwei Verstärkungszugstangen (21, 22) umfasst, die sich zwischen dem Armaturenbrettquerträger im Bereich des Lenksäulenhalters und dem vorderen Fuß erstrecken.

2. Vorrichtung nach Anspruch 1, **dadurch gekennzeichnet, dass** eine erste Verstärkungszugstange (21) an einem oberen Teil (12a) des vorderen Fußes (12) befestigt ist, und dadurch, dass eine zweite Verstärkungszugstange (22) an einem unteren Teil (12b) des vorderen Fußes befestigt ist, der sich, bezogen auf den Armaturenbrettquerträger (15), gegenüber dem oberen Teil des vorderen Fußes befindet.

3. Vorrichtung nach einem der vorhergehenden Ansprüche, **dadurch gekennzeichnet, dass** die mindestens eine Verstärkungszugstange aus einem geraden Hohlkörper besteht, der sich zwischen seinen zwei Enden längs erstreckt und einen konstanten Querschnitt besitzt.

4. Vorrichtung nach Anspruch 3, **dadurch gekennzeichnet, dass** der Querschnitt im Wesentlichen kreisförmig oder quadratisch ist.

5. Vorrichtung nach einem der vorhergehenden Ansprüche, **dadurch gekennzeichnet, dass** die mindestens eine Verstärkungszugstange aus Stahl oder aus Aluminium besteht.

6. Vorrichtung nach einem der vorhergehenden Ansprüche, **dadurch gekennzeichnet, dass** das erste und zweite Ende der mindestens einen Verstärkungszugstange durch Schweißen und/oder Verschrauben befestigt sind.

## Claims

1. Connecting device intended to stiffen the steering column of a motor vehicle, of the type comprising a body structure (10) delimiting a passenger compartment of the vehicle and a dashboard crossmember (15) intended to receive a steering column support (14) to which a steering column (13) is fastened, said connecting device comprising at least one reinforcing element bearing against said crossmember, said structure comprising a front pillar (12) on the driver's side extending said structure laterally and vertically on the passenger compartment side, said dashboard crossmember (15) being connected to a flange (16) rigidly fastened to said front pillar, said reinforcing element comprising at least one reinforcing tie rod (21, 22) comprising a first end (21a, 22a) fastened to said dashboard crossmember in the region of said column support and a second end (21b, 22b) fastened to said front pillar of the vehicle, **characterized in that** it comprises two reinforcing tie rods (21, 22) extending between said dashboard crossmember in the region of said column support and said front pillar.

2. Device according to Claim 1, **characterized in that** a first reinforcing tie rod (21) is fastened to an upper part (12a) of said front pillar (12), and **in that** a second reinforcing tie rod (22) is fastened to a lower part (12b) of said front pillar, located opposite said upper part of said front pillar with respect to said dashboard crossmember (15).

3. Device according to either one of the preceding claims, **characterized in that** said at least one reinforcing tie rod is constituted by a straight hollow body extending longitudinally between its two ends and having a constant cross section.

4. Device according to Claim 3, **characterized in that** the cross section is substantially circular or square.

5. Device according to any one of the preceding claims, **characterized in that** said at least one reinforcing tie rod is made of steel or aluminium.

6. Device according to any one of the preceding claims, **characterized in that** the first and second ends of said at least one reinforcing tie rod are fastened by welding and/or screwing.
